# EUROPÄISCHE PATENTANMELDUNG

(11) **EP 2 511 129 A1**
(43) Veröffentlichungstag der Anmeldung: **17.10.2012**
(21) Anmeldenummer: 12159555.7
(22) Anmeldetag: 15.03.2012
(51) Int. Cl.: B60N 2/68, B60N 2/16

(54) **Kraftfahrzeugsitztraverse**

(30) Priorität: 11.04.2011 DE 102011007129
(71) Anmelder: Thiel & Hoche GmbH & Co. KG, 40699 Erkrath (DE)
(72) Erfinder: Lilla, Guido, 57489 Drolshagen (DE); Böhm, Fred, 40699 Erkrath (DE)
(74) Vertreter: Kalkoff & Partner

(57) **Zusammenfassung**

Die Erfindung betrifft eine Kraftfahrzeugsitztraverse (1) mit
- einem rohrförmigen Grundkörper (2) und
- einem an dem Grundkörper (2) angeordneten Aufnahmeabschnitt (6a,6b) zur verdrehsicheren Anordnung eines Kopplungselements (4).
Um eine Kraftfahrzeugsitztraverse (1) bereitzustellen, die sich kostengünstig herstellen lässt sowie ein geringes Gewicht und eine hohe Festigkeit aufweist, ist vorgesehen, dass der Aufnahmeabschnitt (6a,6b) ein koaxial zum Grundkörper (2) angeordnetes und an dessen Innen- oder Außenfläche anliegendes Verstärkungsrohr (3a,3b), sowie einen durch gemeinsame Verformung, insbesondere Kaltverformung von Grundkörper (2) und Verstärkungsrohr (3a,3b) hergestellten, von einer Kreisform abweichenden Querschnitt aufweist.

## Beschreibung

Die Erfindung betrifft eine Kraftfahrzeugsitztraverse mit
- einem rohrförmigen Grundkörper und
- einem an dem Grundkörper angeordneten Aufnahmeabschnitt zur verdrehsicheren Anordnung eines Kopplungselements.

Kraftfahrzeugsitztraversen der eingangs genannten Art werden in vielfältigen Ausgestaltungen zum Aufbau von Kraftfahrzeugsitzen genutzt, wobei sie sich - bezogen auf die Einbaulage des Kraftfahrzeugsitzes am Kraftfahrzeug - quer zur Fahrzeugrichtung des Sitzes, insbesondere Sitzuntergestells erstrecken. In einer typischen Ausgestaltung der Kraftfahrzeugsitztraverse erstreckt sich diese zwischen den Seitenteilen eines Kraftfahrzeugsitzes und dient zur verdrehsicheren Aufnahme von geeigneten Schwingen, mittels derer eine Verstellbarkeit des Kraftfahrzeugsitzes, bspw. Höhenverstellbarkeit, möglich ist, wobei hierzu die Kraftfahrzeugsitztraverse drehgelenkig mit den Seitenteilen eines Kraftfahrzeugsitzes verbunden ist.

Wesentlich für die Funktion der Kraftfahrzeugsitztraverse, insbesondere im Falle deren Verwendung als Schwingenträger, ist eine zuverlässige Drehmomentübertragung von der Schwinge auf den rohrförmigen Grundkörper. Hierzu werden üblicherweise solche Rohrkörper verwendet, die aufgrund ihrer Abmessungen und/oder Materialwahl eine ausreichende Festigkeit bieten. Umjedoch den gestiegenen Anforderungen der Fahrzeughersteller nach einer Gewichts- sowie Bauraumreduzierung nachzukommen, sind mittlerweile aufwendige Fertigungsverfahren erforderlich und/oder es müssen hochfeste Werkstoffe verwendet werden, um Kraftfahrzeugsitztraversen mit den gewünschten Eigenschaften herstellen zu können. Hieraus resultieren jedoch hohe Fertigungskosten, welche insgesamt zu einer Verteuerung des Kraftfahrzeugsitzes führen.

Der Erfindung liegt die Aufgabe zugrunde, eine Kraftfahrzeugsitztraverse bereitzustellen, die sich kostengünstig herstellen lässt sowie ein geringes Gewicht und eine hohe Festigkeit aufweist.

Die Erfindung löst die Aufgabe durch eine Kraftfahrzeugsitztraverse mit den Merkmalen des Anspruchs **1.** Vorteilhafte Weiterbildungen werden in den abhängigen Ansprüchen beschrieben.

Kennzeichnend für die erfindungsgemäße Kraftfahrzeugsitztraverse ist, dass der Aufnahmeabschnitt, an dem ein Kopplungselement an dem Grundkörper der Kraftfahrzeugsitztraverse angeordnet ist, bspw. eine mit der Kraftfahrzeugsitztraverse verbundene Schwinge, ein koaxial zum Grundkörper angeordnetes und an der Innen- oder Außenfläche des Grundkörpers anliegendes Verstärkungsrohr aufweist, wobei der Aufnahmeabschnitt durch gemeinsame Verformung, insbesondere Kaltverformung des Grundkörpers und des Verstärkungsrohres hergestellt ist und dabei einen von einer Kreisform abweichenden Querschnitt aufweist.

Das Verstärkungsrohr erstreckt sich gemäß der Erfindung nur über einen Teilbereich des Grundkörpers, nämlich in dem Bereich, in dem die Kraftfahrzeugsitztraverse mit einem Kopplungselement, bspw. einer Schwinge, verbunden ist. Um dabei eine verdrehsichere Verbindung des Kopplungselements mit der Kraftfahrzeugsitztraverse zu gewährleisten, sind das Verstärkungsrohr und der Grundkörper zur Bildung eines entsprechenden Aufnahmeabschnitts mit einem von einer Kreisform abweichenden Querschnitt gemeinsam durch Verformung, insbesondere Kaltverformung umgeformt, so dass sich das Kopplungselement formschlüssig mit der Kraftfahrzeugsitztraverse verbinden lässt, wozu eine Aufnahmeöffnung des Kopplungselements an den Querschnitt des Aufnahmeabschnitts angepasst ist.

Die Verwendung eines den Grundkörper stabilisierenden Verstärkungsrohres, das sich nur über einen Teilbereich des Grundkörpers erstreckt, gewährleistet eine drehmomentstabile Verbindung des Kopplungselements mit der Kraftfahrzeugsitztraverse. Ein durch das Kopplungselement, bspw. eine Schwinge, eingebrachtes Drehmoment wird zuverlässig auf die Kraftfahrzeugsitztraverse übertragen, ohne dass es zu einem Ausreißen oder Verdrehen des Kopplungselements gegenüber dem Aufnahmeabschnitt kommt, wobei insbesondere bei einer vorteilhafterweise vorgesehenen Anordnung von zwei oder mehr Kopplungselementen, bspw. Schwingen, im Erstreckungsbereich eines Verstärkungsrohres eine besonders gute Eignung zur Drehmomentübertragung zwischen diesen Kopplungselementen vorliegt.

Erfindungsgemäß lässt sich die Kraftfahrzeugsitztraverse somit in der herstellerseits geforderten stabilen Weise fertigen, wobei gleichzeitig jedoch durch die nur partielle Verstärkung des Grundkörpers die Kraftfahrzeugsitztraverse ein geringes Eigengewicht aufweist. Die Verwendung eines Verstärkungsrohres ermöglicht es darüber hinaus auch bei kleinen Baugrößen und geringen Durchmessern sowie Wanddicken für den Grundkörper, auf die Verwendung hochfester Werkstoffe zu verzichten und stattdessen für den Grundkörper kostengünstige Materialien zu verwenden. Das Verstärkungsrohr erstreckt sich dabei über ein entsprechend den konstruktiven Voraussetzungen festgelegten Bereich des Grundkörpers und kann seinerseits ebenfalls aus preiswerten Standardmaterialien hergestellt werden. Die gemeinsame Umformung von Grundkörper und Verstärkungsrohr erfolgt in kostengünstiger Weise, insbesondere durch Kaltverformung.

Die Ausgestaltung des Aufnahmeabschnitts zur verdrehsicheren Anordnung eines Kopplungselements ist grundsätzlich frei wählbar. So kann dieser bspw. einen ellipsenförmigen Querschnitt aufweisen, um eine ausreichende Drehmomentübertragung zu gewährleisten. Nach einer besonders vorteilhaften Ausgestaltung der Erfindung weist der Aufnahmeabschnitt jedoch einen polygonalen, bspw. sechseckigen Querschnitt auf. Ein entsprechend ausgebildeter Aufnahmeabschnitt lässt sich durch gemeinsame Verformung von Verstärkungsrohr und Grundkörper besonders einfach und kostengünstig herstellen und ermöglicht eine besonders zuverlässige verdrehsichere Anordnung der Schwinge, welche ebenfalls in kostengünstiger Weise mit einer entsprechend ausgebildeten Aufnahmeöffnung ausgebildet sein kann.

Zur Anordnung des Kopplungselements ist es lediglich erforderlich, dieses auf den Aufnahmeabschnitt aufzustecken, wobei die Ausgestaltung des Aufnahmeabschnitts in Abhängigkeit von der Aufnahmeöffnung des Kopplungselements auch derart erfolgen kann, dass beim Aufschieben eine kraftschlüssige Verbindung hergestellt wird. Nach einer besonders vorteilhaften Ausgestaltung der Erfindung kann der Aufnahmeabschnitt zur Anordnung des Kopplungselements hierzu eine sich verjüngende Form aufweisen, wobei der Querschnitt des Aufnahmeabschnitts besonders vorteilhafterweise entgegen der Aufschieberichtung des Kopplungselements auf den Aufnahmeabschnitt abnimmt. Ein entsprechend ausgestalteter Aufnahmeabschnitt, bei dem die Verjüngung sowohl durch einen abgestuften Verlauf des Querschnitts des Aufnahmeabschnitts in Richtung der Enden der Kraftfahrzeugsitztraverse als auch durch einen sich kontinuierlich verjüngenden Querschnitt gebildet sein kann, ermöglicht aufgrund des zunächst vorliegenden Durchmesserunterschieds zwischen der Aufnahmeöffnung und dem Aufnahmeabschnitt eine besonders einfache Montage des Kopplungselements. Gleichzeitig wird jedoch durch den in Aufschieberichtung abnehmenden Durchmesserunterschied eine stabile, formschlüssige Anordnung auf dem Aufnahmeabschnitt erreicht, wobei das Kopplungselement hierzu eine entsprechend ausgebildete Aufnahmeöffnung aufweist.

Die Anordnung des Verstärkungsrohres an dem Grundkörper kann grundsätzlich in beliebiger Weise erfolgen, wobei auch eine Anordnung auf einer Außenfläche des Grundkörpers möglich ist. Nach einer besonders vorteilhaften Ausgestaltung der Erfindung ist das Verstärkungsrohr jedoch innerhalb des Grundkörpers, bevorzugt im Bereich eines Endes des Grundkörpers angeordnet. Eine entsprechende Ausgestaltung verhindert eine Durchmessererhöhung der Kraftfahrzeugsitztraverse im Bereich des Verstärkungsrohres. Dieses lässt sich in besonders einfacher Weise durch Einschieben in ein Ende des Grundkörpers einsetzen und durch gemeinsame Verformung, insbesondere Kaltverformung mit dem Grundkörper zur Bildung des Aufnahmeabschnitts umformen. Die Anpassung des Verstärkungsrohres an den Grundkörper erfolgt dabei derart, dass sich das Verstärkungsrohr passgenau in den Grundkörper einschieben lässt.

Durch die zur Herstellung des Aufnahmeabschnitts stattfindende Verformung des Verstärkungsrohres mit dem Grundkörper wird eine besonders zuverlässige Verbindung und Positionssicherung des Verstärkungsrohres an dem Grundkörper erreicht. Nach einer besonders vorteilhaften Ausgestaltung der Erfindung ist darüber hinaus vorgesehen, dass in einem von dem Aufnahmeabschnitt abweichenden Bereich der Grundkörper und das Verstärkungsrohr zusätzlich gemeinsam zur Herstellung einer Verjüngung verformt, insbesondere kaltverformt sind. Die Verjüngung, in deren Bereich die Kraftfahrzeugsitztraverse einen gegenüber den angrenzenden Bereichen der Kraftfahrzeugsitztraverse geringeren Durchmesser aufweist, bspw. eine umlaufende Nut oder eine umlaufende Vertiefung mit einem polygonalen Querschnitt, gewährleistet in besonders zuverlässiger Weise die Positionssicherung des Verstärkungsrohres an dem Grundkörper. Eine axiale Verlagerung des Verstärkungsrohres gegenüber dem Grundkörper wird besonders wirksam verhindert. Bei einer Ausgestaltung der Verjüngung entsprechend dem Querschnitt des Aufnahmeabschnitts kann dabei das zur Herstellung des Aufnahmeabschnitts verwendete Werkzeug in kosteneffizienter Weise ebenfalls zur Herstellung der Verjüngung verwendet werden.

Das Verstärkungsrohr dient in erster Linie zur partiellen Verstärkung des Grundkörpers im Bereich des anzuordnenden Kopplungselements und dabei zur Ausgestaltung des Aufnahmeabschnitts. Darüber hinaus kann das Verstärkungsrohr jedoch auch weitere Funktionen erfüllen. So ist nach einer vorteilhaften Weiterbildung der Erfindung vorgesehen, dass das Verstärkungsrohr zur verdrehsicheren Anordnung eines Endes einer innerhalb des Grundkörpers angeordneten Drehstabfeder ausgebildet ist. Eine Drehstabfeder, welche im Kraftfahrzeugsitzbereich zur Unterstützung von Sitzverstellbewegungen genutzt wird und hierzu beidenends festgelegt sein muss, kann gemäß dieser Ausgestaltung der Erfindung mit einem Ende an dem entsprechend ausgestalteten Verstärkungsrohr festgelegt werden, so dass auf ergänzende Befestigungsmittel verzichtet werden kann, wodurch ein entsprechender Montageaufwand reduziert wird.

Besonders vorteilhafterweise weist dabei das Verstärkungsrohr eine trichterförmige Aufnahmeöffnung zur Anordnung des einen Endes der Drehstabfeder auf, wodurch sich die Montage in ergänzender Weise vereinfachen lässt, so dass die Herstellungskosten eines unter Verwendung einer entsprechend ausgebildeten Kraftfahrzeugsitztraverse hergestellten Kraftfahrzeugsitzes reduziert werden können.

Die Verbindung zwischen dem Grundkörper und dem Verstärkungsrohr wird in zuverlässiger Weise bereits durch die zur Herstellung des Aufnahmeabschnitts erfolgende Verformung, insbesondere Kaltverformung gewährleistet. Nach einer besonders vorteilhaften Ausgestaltung der Erfindung sind das Verstärkungsrohr und der Grundkörper jedoch auch stoffschlüssig miteinander verbunden, insbesondere miteinander verschweißt bspw. durch spiralförmiges Laserschweißen. Durch eine entsprechende Ausgestaltung, wobei der Grundkörper und das Verstärkungsrohr auch verklebt werden können, wird die Position des Verstärkungsrohres an dem Grundkörper in ergänzender Weise gesichert und einem Verdrehen des Verstärkungsrohres gegenüber dem Grundkörper besonders zuverlässig vorgebeugt.

Wie bereits an obiger Stelle ausgeführt, kann das Verstärkungsrohr neben dessen Beitrag zur Bildung des Aufnahmeabschnitts auch weitere Funktionen erfüllen. So ist nach einer weiteren Ausgestaltung der Erfindung vorgesehen, dass das Verstärkungsrohr im montierten Zustand einen über das Ende des Grundkörpers hinausragenden Lagerabschnitt aufweist, der durch Verformung, insbesondere Kaltverformung des Verstärkungsrohres einen um bis zu 50 % geringeren Durchmesser als der Grundkörper aufweist.

Gemäß dieser Ausgestaltung der Erfindung dient ein aus dem Grundkörper herausragender Abschnitt des Verstärkungsrohres zur Lagerung der Kraftfahrzeugsitztraverse an einem geeigneten Fahrzeugsitzbauteil. Die Verwendung eines entsprechenden Verstärkungsrohres ermöglicht es dabei, dieses abschnittsweise mit einem gegenüber dem Grundkörper um bis zu 50 % geringeren Durchmesser auszuführen. Hierdurch ergibt sich die Möglichkeit, die am Kraftfahrzeugsitz vorzusehende Lageraufnahme ebenfalls mit einer nur geringen Größe auszuführen, wodurch sich geringere strukturelle Schwächungen ergeben. Das Verstärkungsrohr kann bereits vor der Montage an dem Grundkörper mit einem entsprechenden durchmesserreduzierten Lagerabschnitt versehen sein, so dass auf umfangreiche Nacharbeiten verzichtet werden kann.

Die Anzahl der an dem Grundkörper anzuordnenden Verstärkungsrohre kann grundsätzlich entsprechend der erforderlichen Aufnahmeabschnitte frei gewählt werden. Besonders vorteilhafterweise ist jedoch vorgesehen, dass ein, vorzugsweise zwei Verstärkungsrohre jeweils im Bereich der Enden des Grundkörpers angeordnet sind. Hierdurch lässt sich eine vielseitig einsetzbare Kraftfahrzeugsitztraverse mit zwei Aufnahmeabschnitten herstellen, welche einem Großteil der im Kraftfahrzeugsitzbereich gestellten Anforderungen gerecht werden.

Nach einer weiteren Ausgestaltung der Erfindung ist vorgesehen, dass im Bereich eines ersten Endes des Grundkörpers ein zur Aufnahme eines Endes einer Drehstabfeder ausgebildetes Verstärkungsrohr und im Bereich eines zweiten Endes des Grundkörpers ein mit einem Lagerabschnitt über das Ende des Grundkörpers hinausragende Verstärkungsrohr angeordnet ist. Gemäß dieser Ausgestaltung der Erfindung dient das im Bereich des ersten Endes angeordnete Verstärkungsrohr neben der Ausgestaltung des Aufnahmeabschnitts ferner noch zur Anordnung einer sich innerhalb der Kraftfahrzeugsitztraverse erstreckenden Drehstabfeder, welche mit ihrem gegenüberliegenden Ende aus dem Grundkörper und des im Bereich des zweiten Endes angeordnete Verstärkungsrohr hinausragt. Eine entsprechend ausgebildete Kraftfahrzeugsitztraverse lässt sich besonders einfach und kostengünstig herstellen und ermöglicht dabei auch eine gute Anbindung einer im Rahmen des Kraftfahrzeugsitzes verwendbaren Drehstabfeder.

Ein Ausführungsbeispiel der Erfindung wird nachstehend mit Bezug auf die Zeichnungen näher erläutert. In den Zeichnungen zeigen:
- Fig. 1: eine perspektivische Ansicht einer Kraftfahrzeugsitztraverse mit daran angeordneten Schwingen;

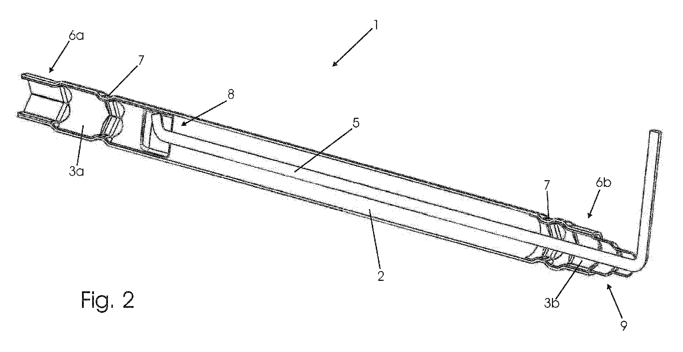

- Fig. 2: eine perspektivische Ansicht der in Längsachsenrichtung aufgeschnittenen Kraftfahrzeugsitztraverse von Fig. 1;

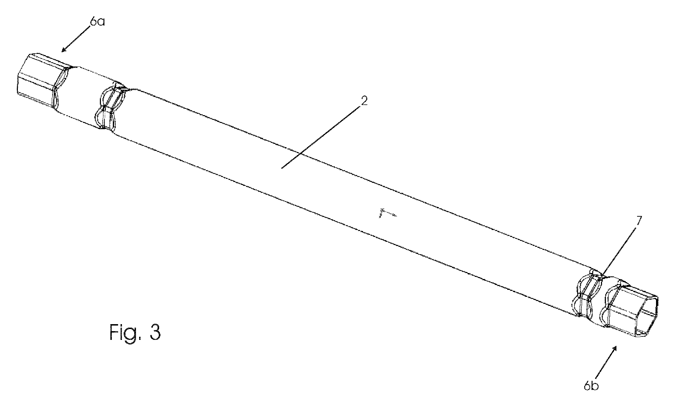

- Fig. 3: eine perspektivische Ansicht eines Grundkörpers der Kraftfahrzeugsitztraverse von Fig.1;

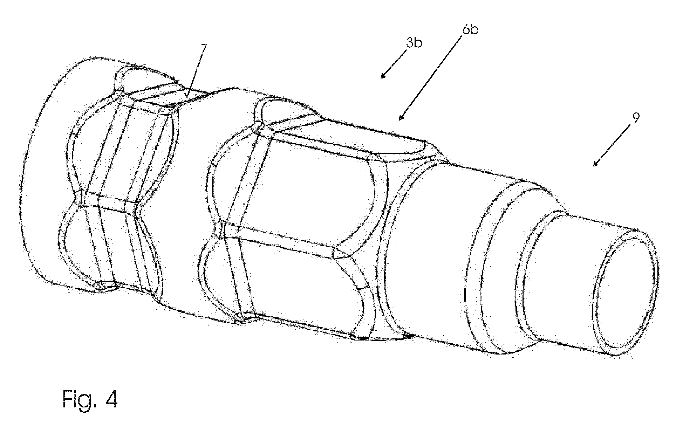

- Fig. 4: eine perspektivische Ansicht eines ersten Verstärkungsrohres der Kraftfahrzeugsitztraverse von Fig. 1 mit Lagerabschnitt;

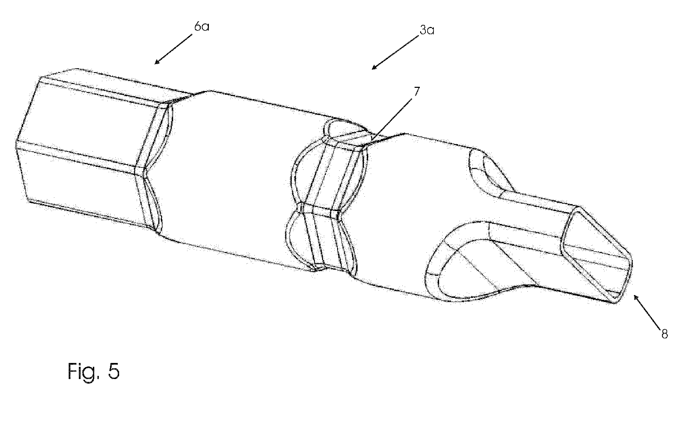

- Fig. 5: eine perspektivische Ansicht eines zweiten Verstärkungsrohres der Kraftfahrzeugsitztraverse von Fig. 1 mit einem Aufnahmeabschnitt für eine Drehstabfeder und
- Fig. 6: eine perspektivische Ansicht der Kraftfahrzeugtraverse von Fig. 1 mit einer weiteren Schwinge.

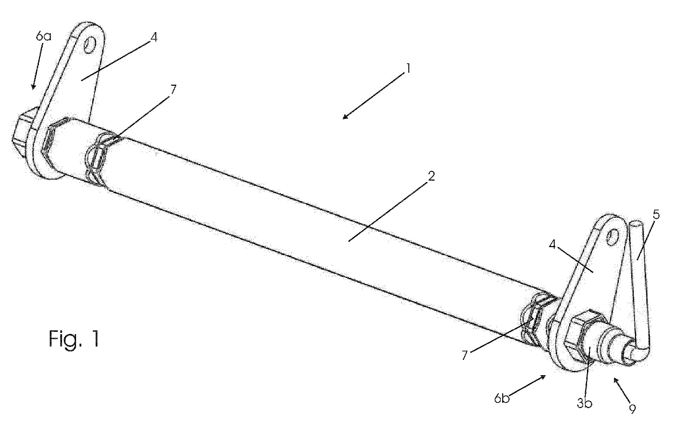

Fig. 1 zeigt in einer perspektivischen Ansicht ein Ausführungsbeispiel einer Kraftfahrzeugsitztraverse 1, welche aus einem rohrförmigen Grundkörper 2 sowie in die offenen Enden des rohrförmigen Grundkörper 2 eingeschobene Verstärkungsrohre 3a, 3b gebildet ist.

Die Verstärkungsrohre 3a, 3b sind dabei in die Enden des Grundkörpers 2 eingesteckt und durch gemeinsame Verformung, insbesondere Kaltverformung mit dem Grundkörper 2 verbunden. Die beiden unterschiedlichen Verstärkungsrohren 3a, 3b bilden dabei beide gemeinsam mit dem Grundkörper 2 einen im Querschnitt polygonalen Aufnahmeabschnitt 6a, 6b sowie eine Verjüngung 7, welche ebenfalls einen polygonalen Querschnitt aufweist. Darüber hinaus weist das zur Bildung eines ersten Aufnahmeabschnitts 6a verwendete Verstärkungsrohr 3a eine abgeflachte Aufnahmeöffnung 8 zur Aufnahme eines Endes einer sich innerhalb des Grundkörpers 2 erstreckenden Drehstabfeder 5 auf. Die Drehstabfeder 5 ist in der Aufnahmeöffnung 8 verdrehsicher angeordnet und ermöglicht so bei einer entsprechend verdrehsicheren Anordnung des der Aufnahmeöffnung 8 gegenüberliegenden Endes der Drehstabfeder 5 bestimmungsgemäßen Gebrauch, wobei diese Verstellbewegungen eines hier nicht dargstellten Kraftfahrzeugsitzes unterstützt. Die Drehstabfeder 5 erstreckt sich dabei im Bereich des dem ersten Aufnahmeabschnitt 6a gegenüberliegenden Ende des Grundkörpers 2 durch ein zweites Ende des Grundkörpers 2 und das im Bereich des zweiten Endes angeordnete Verstärkungsrohr 3b, welches abweichend zu dem Verstärkungsrohr 3a einen sich über das Ende des Grundkörpers 2 hinaus erstreckenden Lagerabschnitt 9 aufweist, welcher einen gegenüber dem Durchmesser des Grundkörpers 2 um bis zu 50 % reduzierten Durchmesser aufweist.

Zur Übertragung von Drehmomenten auf die Kraftfahrzeugsitztraverse 1 dienen auf den Aufnahmeabschnitten 6a, 6b angeordnete Schwingen 4, die hierzu eine an die Aufnahmeabschnitte 6a, 6b angepasste Aufnahmeöffnungen aufweisen.

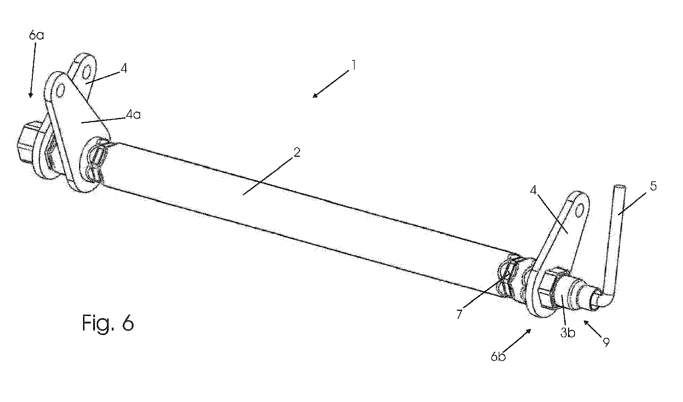

Bei der in Fig. 6 dargestellten Ausführungsform der Kraftfahrzeugsitztraverse 1 ist im Bereich des Verstärkungsrohres 3a, nämlich im zylindrischen Bereich zwischen der Verjüngung 7 und dem Aufnahmeabschnitt 6a eine weitere Schwinge 4a mit dem Grundrohr 2 verschweißt und somit verdrehfest verbunden.

Die Anordnung der Schwinge 4a im Erstreckungsbereich des bereits zur Aufnahme der Schwinge 4 vorgesehenen Verstärkungsrohres 3a erlaubt aufgrund des festigkeitssteigernden Effekts des Verstärkungsrohres 3a eine besonders hohe Drehmomentübertragung zwischen den beiden Schwingen 4, 4a. Darüber hinaus lässt sich auch eine schweißtechnische Verbindung der Schwinge 4a im Bereich des Verstärkungsrohres 3a besonders gut realisieren, nachdem durch die durch das Verstärkungsrohr 3a hervorgerufene Volumenvergrößerung der Wandstärke einem Durchbrand wirkungsvoll vorgebeugt wird.

## Patentansprüche

1. Kraftfahrzeugsitztraverse mit
- einem rohrförmigen Grundkörper und
- einem an dem Grundkörper angeordneten Aufnahmeabschnitt zur verdrehsicheren Anordnung eines Kopplungselements
**dadurch gekennzeichnet, dass**
der Aufnahmeabschnitt (6a, 6b) ein koaxial zum Grundkörper (2) angeordnetes und an dessen Innen- oder Außenfläche anliegendes Verstärkungsrohr (3a, 3b), sowie einen durch gemeinsame Verformung, insbesondere Kaltverformung von Grundkörper (2) und Verstärkungsrohr (3a, 3b) hergestellten, von einer Kreisform abweichenden Querschnitt aufweist.

2. Kraftfahrzeugsitztraverse nach Anspruch 1, **dadurch gekennzeichnet, dass** der Aufnahmeabschnitt (6a, 6b) einen polygonalen Querschnitt aufweist.

3. Kraftfahrzeugsitztraverse nach Anspruch 1 oder 2, **dadurch gekennzeichnet, dass** sich der Aufnahmeabschnitt (6a, 6b) entgegen der Aufschieberichtung des Kopplungselements (4) auf den Aufnahmeabschnitt (6a, 6b) verjüngt.

4. Kraftfahrzeugsitztraverse nach einem der vorhergehenden Ansprüche, **dadurch gekennzeichnet, dass** das Verstärkungsrohr (3a, 3b) innerhalb des Grundkörpers (2), besonders bevorzugt im Bereich eines Endes des Grundkörpers (2) angeordnet ist.

5. Kraftfahrzeugsitztraverse nach einem der vorhergehenden Ansprüche, **gekennzeichnet durch** eine **durch** gemeinsame Verformung, insbesondere Kaltverformung von Grundkörper (2) und Verstärkungsrohr (3a, 3b) in einem vom Aufnahmeabschnitt (6a, 6b) abweichenden Bereich hergestellte Verjüngung (7).

6. Kraftfahrzeugsitztraverse nach einem der vorhergehenden Ansprüche, **dadurch gekennzeichnet, dass** das Verstärkungsrohr (3a) zur verdrehsicheren Anordnung eines Endes einer innerhalb des Grundkörpers (2) angeordneten Drehstabfeder (5) ausgebildet ist.

7. Kraftfahrzeugsitztraverse nach einem der vorhergehenden Ansprüche, **dadurch gekennzeichnet, dass** das Verstärkungsrohr (3a) eine trichterförmige Aufnahmeöffnung (8) zur Anordnung des einen Endes der Drehstabfeder (5) aufweist.

8. Kraftfahrzeugsitztraverse nach einem der vorhergehenden Ansprüche, **dadurch gekennzeichnet, dass** das Verstärkungsrohr (3a, 3b) und der Grundkörper (2) stoffschlüssig miteinander verbunden sind, insbesondere miteinander verschweißt sind.

9. Kraftfahrzeugsitztraverse nach einem der vorhergehenden Ansprüche, **dadurch gekennzeichnet, dass** das Verstärkungsrohr (3b) einen über das Ende des Grundkörpers (2) hinausragenden Lagerabschnitt (9) aufweist, der durch Verformung, insbesondere Kaltverformung des Verstärkungsrohrs (3b) einen um bis zu 50 % geringeren Durchmesser als der Grundkörper (2) aufweist.

10. Kraftfahrzeugsitztraverse nach einem der vorhergehenden Ansprüche, **dadurch gekennzeichnet, dass** ein vorzugsweise zwei Verstärkungsrohre (3a, 3b) jeweils in den Enden des Grundkörpers (2) angeordnet sind.

11. Kraftfahrzeugsitztraverse nach einem der vorhergehenden Ansprüche, **dadurch gekennzeichnet, dass** im Bereich eines ersten Endes des Grundkörpers (2) ein zur Aufnahme eines Endes einer Drehstabfeder (5) ausgebildetes Verstärkungsrohr (3a) und im Bereich eines zweiten Endes des Grundkörpers (2) ein mit einem Lagerabschnitt (9) über das Ende des Grundkörpers (2) hinausragende Verstärkungsrohr (3b) angeordnet ist.
